# FASCICULE DE BREVET EUROPEEN

(11) **EP 2 564 064 B1**
(45) Date de publication et mention de la délivrance du brevet: **18.12.2019**
(21) Numéro de dépôt: 11723536.6
(22) Date de dépôt: 29.04.2011
(51) Int. Cl.: F03H 1/00, H01J 1/22, H01J 1/15, G05D 23/24

(54) **MOTEUR A EFFET HALL AVEC REGULATION DE LA TEMPERATURE DU DISPOSITIF DE CHAUFFAGE DE LA CATHODE**
HALLEFFEKT-MOTOR MIT TEMPERATURREGELUNG DES KATHODENHEIZAGGREGATS
HALL-EFFECT THRUSTER WITH REGULATION OF THE CATHODE HEATER TEMPERATURE

(30) Priorité: 29.04.2010 FR 1053311
(43) Date de publication de la demande: 06.03.2013
(73) Titulaire: Safran Aircraft Engines, 75015 Paris (FR)
(72) Inventeur: MARCHANDISE, Frédéric, F-27200 Vernon (FR); OBERG, Michael, F-27940 Port Mort (FR); CORNU, Nicolas, F-89120 Malicorne (FR)
(74) Mandataire: Berbinau, Pierre Jean Marie
(86) Numéro de dépôt international: PCT/FR2011/050980
(87) Numéro de publication internationale: WO 2011/135271

(56) Documents cités:
- GB-A- 1 573 679
- US-A- 5 646 476
- US-A1- 2003 193 295
- US-A1- 2009 058 305
- TIGHE W G ET AL: "Performance Evaluation and Life Test of the XIPS HollowCathode Heater", AIAA 2005-4066, 41ST AIAA/ASME/SAE/ASEE JOINT PROPULSION CONFERENCE AND EXHIBIT JULY 2005, AMERICAN INSTITUTE OF AERONAUTICS AND ASTRONAUTICS; USA, 10 juillet 2007 (2007-07-10), pages 1-11, XP008132035,
- TIGHE W G ET AL: "Hollow cathode ignition and life model", AIAA 2005-3666, 41ST AIAA/ASME/SAE/ASEE JOINT PROPULSION CONFERENCE AND EXHIBIT - 41ST AIAA/ASME/SAE/ASEE JOINT PROPULSION CONFERENCE AND EXHIBIT 2005 AMERICAN INSTITUTE OF AERONAUTICS AND ASTRONAUTICS, USA, juillet 2005 (2005-07), XP007916889,
- POLK J ET AL: "Emitter Temperature Distributions in the NSTAR Discharge Hollow Cathode", AIAA-2005-4398, 41TH AIAA/ASME/SAE/ASEE JOINT PROPULSION CONFERENCE & EXHIBIT : [10 20050101; 20050710 - 20050713 AMERICAN INSTITUTE OF AERONAUTICS AND ASTRONAUTICS, US, 1 janvier 2005 (2005-01-01), pages 1-2, XP008131888, ISBN: 978-1-56347-764-5
- TIGHE W ET AL: "Hollow Cathode Ignition Studies and Model Development", THE 29TH INTERNATIONAL ELECTRIC PROPULSION CONFERENCE, PRINCETON UNIVERSITY,, 31 octobre 2005 (2005-10-31), pages 1-11, XP007916828,

## Description

La présente invention concerne un moteur à effet Hall comportant un canal de décharge dont l'extrémité aval est ouverte, une cathode située à l'extérieur du canal de décharge, un système d'injection situé à l'extrémité amont du canal de décharge, ce système d'injection étant situé à l'extrémité amont du canal de décharge et formant également anode, et un dispositif de chauffage apte à chauffer la cathode.

Un moteur à effet Hall est un moteur utilisé par exemple dans le domaine de la propulsion spatiale, car il permet de propulser des objets dans le vide spatial en utilisant une masse de combustible plus faible que dans le cas de moteurs thermiques, et présente une durée de vie importante, de plusieurs milliers d'heures. Le document US 2009/0058305 décrit un exemple de moteur à effet Hall.

Le moteur à effet Hall étant connu, sa structure et son principe de fonctionnement sont rappelés ci-après brièvement.

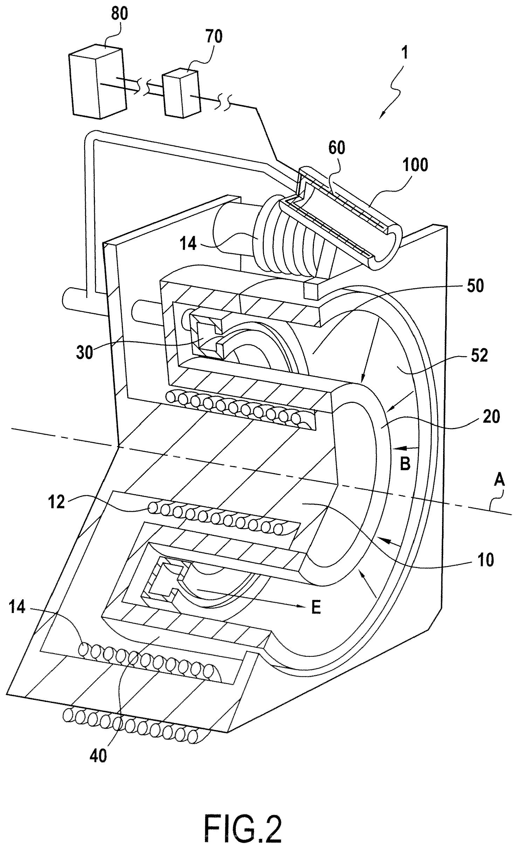

La figure 2 montre un moteur à effet Hall 1 en perspective et en coupe partielle. Autour d'un noyau central 10 s'étendant selon un axe longitudinal A, est situé un bobinage magnétique central 12. Une paroi interne 20, de forme annulaire, entoure le bobinage magnétique central 12 et le noyau central 10. Cette paroi interne 20 est entourée par une paroi externe 40, de forme annulaire, de telle sorte que ces deux parois délimitent un canal annulaire s'étendant selon l'axe A, appelé canal de décharge 50.

Dans la description qui suit, le terme "interne" désigne une partie plus proche de l'axe A, et le terme "externe" une partie plus éloignée de l'axe A.

L'extrémité amont du canal de décharge 50 est fermée par un système d'injection 30 qui injecte des atomes de gaz dans ce canal de décharge 50, et qui constitue également une anode. L'extrémité aval 52 du canal de décharge 50 est ouverte.

Plusieurs bobinages magnétiques périphériques 14 sont situés sur le pourtour de la paroi externe 40. Le bobinage magnétique central 12 et les bobinages magnétiques périphériques 14 servent à générer un champ magnétique radial B dont l'intensité est maximale vers l'extrémité aval 52 du canal de décharge 50.

Une cathode creuse 100 se situe à l'extérieur de la paroi externe 40, et il est établit une différence de potentiel entre la cathode 100 et l'anode (système d'injection 30). Cette cathode creuse 100 est positionnée de telle sorte qu'elle éjecte des électrons au voisinage de l'extrémité aval 52 du canal de décharge 50.

Ces électrons se dirigent, dans le canal de décharge 50, vers le système d'injection 30 sous l'influence du champ électrique généré par la différence de potentiel entre la cathode 100 et l'anode, mais ils se retrouvent en partie piégés par le champ magnétique B au voisinage de l'ouverture aval 52 du canal de décharge 50.

Les électrons sont ainsi amenés à décrire des trajectoires circonférentielles dans le canal de décharge 50, au niveau de son ouverture aval 52. Ces électrons ionisent alors via des chocs les atomes de gaz neutre (en général du xénon Xe) circulant de l'amont vers l'aval dans le canal de décharge 50, créant ainsi des ions. De plus, ces électrons créent un champ électrique E axial, qui accélère ces ions depuis l'anode (système d'injection 30 au fond du canal 80) vers l'ouverture aval 52, de telle sorte que ces ions sont éjectés à grande vitesse du canal de décharge 50 par son extrémité aval 52, ce qui engendre la propulsion du moteur.

Le démarrage du moteur nécessite le préchauffage de la cathode 100 par un dispositif de chauffage 60 jusqu'à une température seuil qui permet l'émission par la cathode de la quantité d'électrons nécessaire à l'établissement dans le canal de décharge 50 d'un courant de décharge critique I_{cd} suffisant pour ioniser les atomes du gaz neutre dans le canal de décharge. L'établissement de ce courant de décharge I_{cd} entraîne le démarrage du moteur.

En général, l'atteinte de cette température seuil est suffisante pour l'établissement de ce courant de décharge I_{cd}.

Dans certaines conditions de fonctionnement défavorables, il faut, pour établir ce courant de décharge I_{cd}, envoyer un ou plusieurs pulses de tension sur la cathode une fois la température seuil atteinte.

En pratique, la température seuil dépend des conditions extérieures au moteur, notamment la température extérieure au moteur (qui peut par exemple varier entre -50°C et +70°C). Afin d'assurer un démarrage du moteur dans toutes les conditions, on choisit une durée de préchauffage fixe suffisamment longue pour que la température seuil la plus élevée, correspondant aux conditions extérieures les plus défavorables, soit atteinte.

Ainsi, dans la majorité des cas, qui correspondent à des conditions favorables ou peu défavorables, la durée de préchauffage est trop longue. Il en résulte une surchauffe inutile de la cathode jusqu'à des températures trop élevées, et donc un endommagement de celle-ci, et une réduction de la durée de vie du moteur.

La présente invention vise à remédier à ces inconvénients.

L'invention vise à proposer un moteur à effet Hall dans lequel la durée de préchauffage est optimisée de telle sorte qu'il ne se produise pas de surchauffe inutile de la cathode lors du démarrage du moteur, et ce dans n'importe quelle condition de fonctionnement de ce moteur.

Ce but est atteint grâce au fait que le moteur à effet Hall tel que décrit dans la revendication 1 comprend en outre un moyen de mesure de la température T_{d} du dispositif de chauffage, et un circuit de régulation de cette température T_{d} de telle sorte que le dispositif de chauffage chauffe tant que sa température T_{d} est inférieure à une température seuil Tₛ à partir de laquelle le démarrage du moteur est susceptible de se produire, et cesse de chauffer dès que l'intensité du courant de décharge émis par ladite cathode atteint une intensité critique du courant de décharge I_{cd} qui correspond au démarrage dudit moteur après que la température seuil Tₛ est atteinte, ladite température seuil Tₛ étant fonction de ladite intensité critique de courant de décharge I_{cd}.

Grâce à ces dispositions, la cathode n'est pas chauffée longtemps au-delà d'une température seuil Tₛ, qui correspond à une température à laquelle le moteur est apte à démarrer. Dans chaque situation de fonctionnement du moteur, la cathode n'est donc chauffée que le temps nécessaire au démarrage du moteur. Il en résulte une minimisation de l'endommagement de la cathode, et une prolongation de la durée de vie du moteur à effet Hall.

L'invention concerne également un procédé de régulation d'un moteur à effet Hall comportant un canal de décharge dont l'extrémité aval est ouverte, une cathode située à l'extérieur du canal de décharge, un système d'injection apte à injecter des atomes de gaz dans le canal de décharge, ce système d'injection étant situé à l'extrémité amont du canal de décharge et formant également anode, et un dispositif de chauffage apte à chauffer la cathode.

Selon l'invention, ce procédé selon la revendication 3 comprend les étapes suivantes :
(a) On chauffe la cathode à l'aide du dispositif de chauffage et on mesure simultanément la température T_{d} du dispositif de chauffage,
(b) On continue ce chauffage de la cathode tant que température T_{d} est inférieure à une température seuil Tₛ à partir de laquelle le démarrage du moteur est susceptible de se produire,
(c) On cesse ce chauffage dès que l'intensité du courant de décharge émis par ladite cathode atteint ladite intensité critique du courant de décharge I_{cd} après que la température seuil Tₛ est atteinte.

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1 est un diagramme illustrant la séquence des étapes du procédé selon l'invention,
- la figure 2 est une vue en coupe en en perspective d'un moteur à effet Hall selon l'invention, illustrant sa structure générale.

Le fonctionnement général d'un moteur à effet Hall a été décrit ci-dessus, en référence à la figure 2.

De plus, dans le moteur à effet Hall selon l'invention, le fonctionnement du moteur est optimisé de façon à ne chauffer la cathode 100 que le temps nécessaire au démarrage du moteur, comme expliqué ci-dessous.

Ainsi, le moteur à effet Hall comprend un moyen de mesure 70 de la température T_{d} du dispositif de chauffage 60, et un circuit de régulation 80 de la température T_{d} du dispositif de chauffage 60.

On explique ci-dessous comment fonctionne ce circuit de régulation 80.

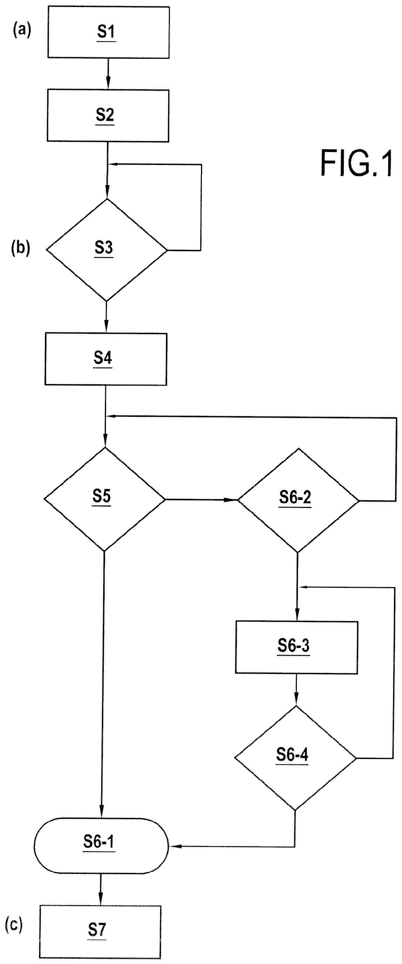

La figure 1 montre un diagramme qui illustre un exemple d'une séquence des étapes du démarrage du moteur à effet Hall, ces étapes comprenant les étapes du démarrage d'un moteur à effet Hall selon l'invention. La séquence des étapes est simplifiée et ne n'illustre pas les possibles mécanismes de sécurité destinés par exemple à identifier les modes fonctionnement erronés lors de démarrage du moteur, et à le stopper si nécessaire. Un rectangle 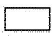 indique une action, un losange 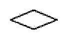 indique un test, un ovale 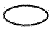 indique un état. En sortie d'un test, une flèche dirigée vers le bas indique que le test a été satisfait, une flèche dirigée vers la droite indique que le test n'a pas été satisfait.

Les étapes du démarrage sont référencées comme suit :
- Etape S1: Allumage du chauffage de la cathode.
- Etape S2: Ouverture de la vanne d'injection amont du gaz.
- Etape S3: La température seuil Tₛ est-elle atteinte ?
- Etape S4: Ouverture de la vanne d'injection aval du gaz dans le canal de décharge.
- Etape S5: Le courant critique de décharge I_{cd} est-il atteint ?
- Etape S6-1 :Auto-allumage du moteur.
- Etape S7: Arrêt du chauffage de la cathode.
- Etape S6-2 :La pression du gaz dans le canal de décharge est-elle supérieure à la pression critique P_{c} ?
- Etape S6-3 :Envoi d'un puise de tension sur la cathode.
- Etape S6-4 :Le courant critique de décharge I_{cd} est-il atteint ?
- Etape S7: Arrêt ou réduction du chauffage de la cathode.

Initialement, on allume le dispositif de chauffage 60 de façon à commencer le chauffage de la cathode 100 (étape S1 = étape (a)). On ouvre alors une vanne d'injection amont du gaz (étape S2) de façon à amener le gaz dans une enceinte (non-représentée), prêt à être injecté dans le canal de décharge 50.

Durant la phase de chauffage du dispositif de chauffage 60, la température de la cathode 100 est mesurée en continu ou à intervalles réguliers de façon à détecter le moment où cette température atteint la température seuil Tₛ (étape S3).

En pratique, on ne mesure pas directement la température de la cathode. On mesure la température T_{d} du dispositif de chauffage 60 qui chauffe la cathode, et on compare cette température avec la température seuil Tₛ, sachant que les températures du dispositif de chauffage 60 et de la cathode 100 sont sensiblement égales. Par exemple, le dispositif de chauffage 60 est intégré à l'intérieur de la cathode 100, comme représenté sur la figure 2.

Ce dispositif de chauffage peut également entourer la cathode 100.

La température T_{d} du dispositif de chauffage 60 est déterminée grâce à un moyen de mesure 70.

Par exemple, on mesure la résistivité électrique du dispositif de chauffage 60. Le moyen de mesure 70 est alors un moyen de mesure de la résistivité électrique. Dans le cas où le dispositif de chauffage 60 comprend un élément chauffant qui chauffe la cathode 100, on mesure la résistivité électrique de cet élément chauffant.

D'autres moyens de mesure sont possibles, par exemple un thermocouple, qui mesure la température du dispositif de chauffage.

Lorsque la température seuil Tₛ est atteinte (étape (b)), une vanne d'injection aval située entre l'enceinte contenant le gaz et le canal de décharge 50 est ouverte de façon à injecter le gaz dans le canal de décharge 50 (étape S4).

Dans certains cas, cette vanne d'injection aval est remplacée par un restricteur qui permet un passage automatique du gaz depuis cette enceinte dans le canal de décharge avec un débit restreint, ce débit étant fonction de la pression dans l'enceinte. Dans ce cas, étant donné que la gamme de montée en température T_{d} du dispositif de chauffage 60 est connue, on ouvre la vanne d'injection amont à un temps calculé de telle sorte que lorsque la température du dispositif de chauffage 60 atteint la température seuil Tₛ, le débit de gaz au travers du restricteur soit suffisant pour que le moteur soit susceptible de démarrer.

La température seuil Tₛ est la température que doit normalement atteindre la cathode 100 pour que le moteur à effet Hall soit susceptible de démarrer. En effet, dans des conditions favorables de fonctionnement du moteur, lorsque cette température seuil Tₛ est atteinte, l'intensité du courant de décharge (flux d'électrons) émis par ladite cathode 100 est alors égale ou supérieure à l'intensité critique de courant de décharge I_{cd} à laquelle les atomes du gaz neutre injectés dans le canal de décharge 50 sont ionisés (étape S5), ce qui entraine le démarrage automatique du moteur (auto allumage du moteur - Étape S6-1). Ce premier mode de démarrage est illustré sur la figure 1.

La température seuil Tₛ est donc une fonction de cette intensité critique de courant de décharge I_{cd}.

La température seuil Tₛ dépend du matériau constituant la cathode. En effet, le démarrage du moteur se produit lorsqu'une intensité critique de courant de décharge I_{cd}, c'est-à-dire un flux d'électrons, est émise par la cathode. Or la densité d'électrons émise par unité de surface de la cathode sous une tension électrique donnée est fonction du matériau constituant la cathode, et de la géométrie de cette cathode. Dans des conditions favorables de fonctionnement, et pour une cathode en héxaborure de lanthane (LaB₆) la température seuil Tₛ est, pour certaines géométries, environ de 1700 °C.

Dans le cas d'une cathode constituée d'oxydes de baryum imprégnant une matrice en tungstène, la température seuil Tₛ est de l'ordre de 1300°C.

Dans certaines conditions défavorables, l'intensité du courant de décharge émis par la cathode 100 n'atteint pas l'intensité critique de courant de décharge I_{cd} lorsque la température de la cathode 100 passe au dessus de la température seuil Tₛ. Afin d'amorcer le démarrage du moteur, il est alors nécessaire d'envoyer sur la cathode 100 un pulse de tension (étape S6-3) afin d'extraire plus d'électrons de la cathode 100, et d'atteindre une intensité de courant de décharge au moins égale à l'intensité critique de courant de décharge I_{cd} (étape S6-4), auquel cas le moteur démarre automatiquement (étape S6-1). Si cette intensité n'est pas atteinte après un premier pulse de tension, un deuxième, et si nécessaire davantage de pulses de tension sont envoyés jusqu'à ce que cette intensité soit atteinte.

Cependant, un tel envoi de pulses n'est efficace que si la pression P_{g} du gaz dans le canal de décharge 50 est supérieure à une pression critique P_{c} (étape S6-2). Dans le cadre du moteur à effet Hall, la pression P_{g} de gaz dans le canal de décharge est liée, de façon connue, à la pression de gaz dans l'enceinte qui est située immédiatement en amont et qui débouche dans le canal de décharge 50 (voir ci-dessus). C'est cette pression de gaz dans l'enceinte qui est directement mesurée.

Les pulses de tension ne sont donc envoyés sur la cathode 100 (étape S6-3) que lorsque cette condition supplémentaire portant sur la pression du gaz dans le canal de décharge 50 est satisfaite. Tant que la pression P_{g} du gaz dans le canal de décharge 50 reste inférieure à la pression critique P_{c}, on continue à chauffer la cathode 100 et à injecter du gaz dans le canal de décharge 50.

On sort de cet état soit parce que le courant critique de décharge I_{cd} est finalement atteint auquel cas il se produit un autoallumage du moteur (étape S6-1), soit parce que la pression P_{g} du gaz dans le canal de décharge 50 devient supérieure à la pression critique P_{c} auquel cas on commence à envoyer un pulse de tension sur la cathode (étape S6-2). Ce second mode de démarrage est illustré en figure 1.

Dans tous les cas (premier mode et second mode), dès que le moteur a démarré, ce qui se produit peu de temps après la température seuil Tₛ atteinte par la cathode 100, le chauffage de la cathode 100 est interrompu ou réduite (étape S7 = étape (c)). Ainsi, on ne chauffe pas inutilement la cathode 100, et on prolonge donc sa durée de vie. Par exemple, le moteur démarre quelques dizaines de secondes après la température seuil Tₛ atteinte.

Ainsi, on cesse de chauffer la cathode 100 quelques secondes à quelques dizaines de secondes (par exemple entre 5 secondes et 300 secondes, et de préférence entre 5 secondes et 60 secondes) après que la température seuil Tₛ est atteinte.

Dans un cas particulier du second cas, on peut être amené à poursuivre le chauffage de la cathode 100 jusqu'à plusieurs minutes après le démarrage du moteur 1. En effet, on se trouve alors dans le cas où le moteur a démarré sans que le courant de décharge ait atteint son intensité critique I_{cd}, et où la pression de gaz en amont est faible car on est en train d'utiliser les dernières réserves de gaz. On poursuit alors le chauffage de la cathode 100 jusqu'à plusieurs minutes après le démarrage du moteur 1 en augmentant la pression de gaz afin d'utiliser de façon efficace ces dernières réserves de gaz.

Le diagramme de la figure 1 n'est qu'un exemple du fonctionnement d'un moteur à effet Hall selon l'invention. Des variations de la séquence de démarrage sont possibles en fonction du type de moteur, sans sortir du cadre de l'invention.

## Revendications

1. Moteur à effet Hall (1) comportant un canal de décharge (50) dont l'extrémité aval (52) est ouverte, une cathode (100) située à l'extérieur dudit canal de décharge (50), un système d'injection (30) apte à injecter des atomes de gaz dans ledit canal de décharge (50), ce système d'injection (30) étant situé à l'extrémité amont dudit canal de décharge (50) et formant également anode, et un dispositif de chauffage (60) apte à chauffer ladite cathode (100), ledit moteur (1) étant **caractérisé en ce qu'**il comprend en outre un moyen de mesure (70) de la température T_{d} dudit dispositif de chauffage (60), et un circuit de régulation (80) de ladite température T_{d} de telle sorte que ledit dispositif de chauffage (60) chauffe tant que sa température T_{d} est inférieure à une température seuil Tₛ à partir de laquelle le démarrage dudit moteur est susceptible de se produire, et cesse de chauffer dès que l'intensité du courant de décharge émis par ladite cathode (100) atteint une intensité critique du courant de décharge I_{cd} qui correspond au démarrage dudit moteur, après que ladite température seuil Tₛ est atteinte, ladite température seuil Tₛ étant fonction de ladite intensité critique de courant de décharge I_{cd}.

2. Moteur à effet Hall (1) selon la revendication 1 **caractérisé en ce que** la température T_{d} dudit dispositif de chauffage (60) est déterminée grâce à la mesure de la résistivité électrique de ce dispositif de chauffage (60).

3. Procédé de régulation d'un moteur à effet Hall (1) selon la revendication 1 ou 2, **caractérisé en ce qu'**il comprend les étapes suivantes :
(a) On chauffe ladite cathode (100) à l'aide du dispositif de chauffage (60) et on mesure simultanément la température T_{d} dudit dispositif de chauffage (60),
(b) On continue ce chauffage de ladite cathode (100) tant que la température T_{d} est inférieure à ladite température seuil Tₛ à partir de laquelle le démarrage dudit moteur est susceptible de se produire,
(c) On cesse ce chauffage dès que l'intensité du courant de décharge émis par ladite cathode (100) atteint ladite intensité critique du courant de décharge I_{cd} après que ladite température seuil Tₛ est atteinte.

4. Procédé de régulation selon la revendications 3, **caractérisé en ce que**: après que ladite température de seuil Tₛ est atteinte par ledit dispositif de chauffage (60), lorsque l'intensité du courant de décharge émis par ladite cathode (100) est inférieure à ladite intensité critique de courant de décharge I_{cd} et la pression P_{g} dudit gaz dans ledit canal de décharge (50) est inférieure à une pression critique P_{c}, on continue à chauffer ladite cathode (100) et à injecter du gaz dans ledit canal de décharge (50).

5. Procédé de régulation selon la revendication 3, **caractérisé en ce que**, après que ladite température de seuil Tₛ est atteinte par ledit dispositif de chauffage (60), lorsque l'intensité du courant de décharge émis par ladite cathode (100) est inférieure à ladite intensité critique de courant de décharge I_{cd} et la pression P_{g} dudit gaz dans ledit canal de décharge (50) est supérieure à une pression critique P_{c}, au moins un pulse de tension est envoyé sur ladite cathode (100) jusqu'à ce que l'intensité du courant de décharge devienne égale à ladite intensité critique de courant de décharge I_{cd} de façon à permettre le démarrage dudit moteur.

## Patentansprüche

1. Hall-Effekt-Motor (1), umfassend einen Entladungskanal (50), dessen stromabwärtiges Ende (52) offen ist, eine Kathode (100), die sich außerhalb des Entladungskanals (50) befindet, ein Einspritzsystem (30), das geeignet ist, Gasatome in den Entladungskanal (50) einzuspritzen, wobei dieses Einspritzsystem (30) am stromaufwärtigen Ende des Entladungskanals (50) gelegen ist und auch eine Anode bildet, sowie eine Heizvorrichtung (60), die geeignet ist, die Kathode (100) aufzuheizen, wobei der Motor (1) **dadurch gekennzeichnet ist, dass** er ferner ein Mittel (70) zum Messen der Temperatur T_{d} der Heizvorrichtung (60) und eine Schaltung zur Regelung (80) der Temperatur T_{d} umfasst, so dass die Heizvorrichtung (60) solange aufheizt, wie ihre Temperatur T_{d} niedriger als eine Schwellentemperatur Tₛ ist, ab der das Starten des Motors stattfinden kann, und das Aufheizen einstellt, sobald die Stärke des durch die Kathode (100) abgegebenen Entladestroms eine kritische Stärke des Entladestroms I_{cd} erreicht, die dem Starten des Motors entspricht, nachdem die Schwellentemperatur Tₛ erreicht ist, wobei die Schwellentemperatur Tₛ von der kritischen Entladestromstärke I_{cd} abhängig ist.

2. Hall-Effekt-Motor (1) nach Anspruch 1, **dadurch gekennzeichnet, dass** die Temperatur T_{d} der Heizvorrichtung (60) durch das Messen des spezifischen elektrischen Widerstands dieser Heizvorrichtung (60) bestimmt wird.

3. Verfahren zur Regelung eines Hall-Effekt-Motors (1) nach Anspruch 1 oder 2, **dadurch gekennzeichnet, dass** es die folgenden Schritte umfasst:
(a) Aufheizen der Kathode (100) mit Hilfe der Heizvorrichtung (60) und gleichzeitiges Messen der Temperatur T_{d} der Heizvorrichtung (60),
(b) Fortsetzen dieses Aufheizens der Kathode (100), solange die Temperatur T_{d} niedriger als die Schwellentemperatur Tₛ ist, ab der das Starten des Motors stattfinden kann,
(c) Einstellen dieses Aufheizens, sobald die Stärke des von der Kathode (100) abgegebenen Entladestroms die kritische Stärke des Entladestroms I_{cd} erreicht, nachdem die Schwellentemperatur Tₛ erreicht ist.

4. Regelungsverfahren nach Anspruch 3, **dadurch gekennzeichnet, dass**:
nachdem die Schwellentemperatur Tₛ durch die Heizvorrichtung (60) erreicht ist, wenn die Stärke des von der Kathode (100) abgegebenen Entladestroms niedriger als die kritische Entladestromstärke I_{cd} ist und der Druck P_{g} des Gases in dem Entladungskanal (50) geringer als ein kritischer Druck P_{c} ist, die Kathode (100) weiter aufgeheizt und weiterhin Gas in den Entladungskanal (50) eingespritzt wird.

5. Regelungsverfahren nach Anspruch 3, **dadurch gekennzeichnet, dass**, nachdem der Schwellentemperatur Tₛ durch die Heizvorrichtung (60) erreicht ist, wenn die Stärke des von der Kathode (100) abgegebenen Entladestroms niedriger als die kritische Entladestromstärke I_{cd} ist und der Druck P_{g} des Gases in dem Entladungskanal (50) größer als ein kritischer Druck P_{c} ist, wenigstens ein Spannungsimpuls an die Kathode (100) gesendet wird, bis die Stärke des Entladestroms gleich der kritischen Entladestromstärke I_{cd} wird, um das Starten des Motors zu ermöglichen.

## Claims

1. A Hall effect thruster (1) having a discharge channel (50) with an open downstream end (52), a cathode (100) situated outside said discharge channel (50), an injector system (30) suitable for injecting atoms of gas into said discharge channel (50), the injector system (30) being situated at the upstream end of said discharge channel (50) and also forming an anode, and a heater device (60) suitable for heating said cathode (100), said thruster (1) being **characterized in that** it further comprises measurement means (70) for measuring the temperature T_{d} of said heater device (60), and a regulator circuit (80) for regulating said temperature T_{d} in such a manner that said heater device (60) heats so long as its temperature T_{d} is less than a threshold temperature Tₛ from which said thruster is capable of starting, and ceases to heat once the magnitude of the discharge current emitted by the cathode (100) reaches a critical magnitude for the discharge current I_{cd} corresponding to the thruster starting, after said threshold temperature Tₛ has been reached, said threshold temperature Tₛ being function of said critical magnitude for the discharge current I_{cd}.

2. A Hall effect thruster (1) according to claim 1, **characterized in that** the temperature T_{d} of said heater device (60) is determined by measuring the electrical resistivity of said heater device (60).

3. A method of regulating a Hall effect thruster (1) according to claim 1 or 2, the method being **characterized in that** it comprises the following steps:
a) heating said cathode (100) by using the heater device (60) while simultaneously measuring the temperature T_{d} of said heater device (60);
b) continuing the heating of said cathode (100) so long as the temperature T_{d} is less than a threshold temperature Tₛ from which said thruster is capable of starting; and
c) ceasing the heating once the magnitude of the discharge current emitted by the cathode (100) reaches said critical magnitude for the discharge current I_{cd} after said threshold temperature Tₛ has been reached.

4. A method of regulating a Hall effect thruster (1) according to claim 3, the method being **characterized in that**,
after said threshold temperature Tₛ has been reached by said heater device (60), and while the magnitude of the discharge current emitted by said cathode (100) is less than said critical magnitude for the discharge current I_{cd} and while the pressure P_{g} of said gas in said discharge channel (50) is less than a critical pressure P_{c},
said cathode (100) continues to be heated and gas continues to be injected into said discharge channel (50) .

5. A method of regulating a Hall effect thruster (1) according to claim 3, the method being **characterized in that**, after said threshold temperature Tₛ has been reached by said heater device (60), and while the magnitude of the discharge current emitted by said cathode (100) is less than said critical magnitude for the discharge current I_{cd} and while the pressure P_{g} of said gas in said discharge channel (50) is less than a critical pressure P_{c}, at least one voltage pulse is applied to said cathode (100) until the magnitude of the discharge current becomes equal to said critical magnitude for the discharge current I_{cd} so as to enable said thruster to start.
